# EUROPÄISCHE PATENTSCHRIFT

(11) **EP 1 112 478 B1**
(45) Veröffentlichungstag und Bekanntmachung des Hinweises auf die Patenterteilung: **27.12.2006**
(21) Anmeldenummer: 99969144.7
(22) Anmeldetag: 07.09.1999
(51) Int. Cl.: G01M 3/16

(54) **ELEKTRISCHE SENSORLEITUNG ZUR LECKAGEERKENNUNG**
ELECTRIC SENSOR LINE FOR DETECTING LEAKAGE
LIGNE DE DETECTION ELECTRIQUE PERMETTANT DE DETECTER DES FUITES

(30) Priorität: 11.09.1998 DE 19841717
(43) Veröffentlichungstag der Anmeldung: 04.07.2001
(73) Patentinhaber: W.L. Gore & Associates GmbH, 85640 Putzbrunn (DE)
(72) Erfinder: BRAUNGART, Heinz, D-91887 Röttenbach (DE); HENNECK, Klaus, D-91781 Wei enbrück (DE)
(74) Vertreter: Hirsch, Peter
(86) Internationale Anmeldenummer: PCT/EP1999/006579
(87) Internationale Veröffentlichungsnummer: WO 2000/016058

(56) Entgegenhaltungen:
- DE-A- 3 503 391
- PATENT ABSTRACTS OF JAPAN vol. 005, no. 021 (P-048), 7. Februar 1981 (1981-02-07) & JP 55 149833 A (MITSUBISHI ELECTRIC CORP), 21. November 1980 (1980-11-21)
- PATENT ABSTRACTS OF JAPAN vol. 005, no. 110 (P-071), 17. Juli 1981 (1981-07-17) & JP 56 053435 A (FURUKAWA ELECTRIC CO LTD:THE), 13. Mai 1981 (1981-05-13)
- PATENT ABSTRACTS OF JAPAN vol. 017, no. 609 (P-1640), 9. November 1993 (1993-11-09) & JP 05 187955 A (SUMITOMO 3M LTD), 27. Juli 1993 (1993-07-27)

## Beschreibung

### GEBIET DER ERFINDUNG

Die Erfindung betrifft eine elektrische Sensorleitung zur Erkennung von Fluiden mit elektrischer Leitfähigkeit, mit einem elektrischen Sensorleiter und mit einer den Sensorleiter umgebenden, fluidundurchlässigen Leiterisolation, die mit Isolationslücken versehen ist. Außerdem betrifft die Erfindung ein damit aufgebautes Sensorkabel und eine ein solches Sensorkabel umfassende Detektoranordnung, sowie ein Verfahren zur Herstellung einer Sensorleitung.

Derartige Sensorleitungen kann man beispielsweise zur Leckageerkennung verwenden. Zu diesem Zweck kann man zwei derartige Sensorleitungen nebeneinander anordnen und an einem Ende mit einer Meßvorrichtung verbinden. Gerät zwischen die beiden Sensorleitungen ein Fluid mit elektrischer Leitfähigkeit, beispielsweise Wasser, Säure, Lauge oder ein anderes elektrisch leitendes Fluid, kommt es an dieser Stelle zu einer elektrischen Überbrückung der beiden Sensorleitungen durch die Isolationslücken der beiden Sensorleitungen hindurch, die sich mit der Meßvorrichtung auswerten läßt.

Solche Sensorleitungen verwendet man beispielsweise im Inneren von Sensorschläuchen, die mit Löchern versehen sind, damit Leckagefluid zu dem Sensorkabel vordringen kann. Derartige Sensorleitungen kann man auch dazu verwenden, Klimaanlagen, Computerräume, Archive oder andere Räumlichkeiten auf das Auftreten von Wasser zu überwachen: Zu diesem Zweck weisen solche Räume Doppelböden auf, zwischen denen Sensorleitungen der genannten Art verlegt sind.

### HINTERGRUND DER ERFINDUNG

Bei bekannten Sensorleitungen werden unterschiedliche Mechanismen ausgenutzt.

Aus der DE-U-6 609 058 ist eine Sensorleitung bekannt, die einen Sicherungsdraht aufweist, der wendelförmig von einem mechanisch gespannten Zugband aus elektrisch leitendem Material umgeben ist, das mittels periodisch entlang des Sicherungsdrahtes angeordneter Stege oder Scheiben in einem radialen Abstand von dem Sicherungsdraht gehalten wird. Die Stege oder Scheiben bestehen aus einem Material, das von dem zu detektierenden Medium, beispielsweise Gas, Säure, Öl oder Feuer, zerstört wird, so daß an der Stelle, an welcher ein solches Medium detektiert wird, das Zugband mit dem Sicherungsdraht in Berührung gelangt und zwischen beiden ein meßbarer elektrischer Kurzschluß entsteht.

Aus der WO-A-90/10209 ist ein Sensorkabel bekannt, das zwei voneinander beabstandete Sensorleiter aufweist, die je durch eine Litze aus elektrisch leitendem Metall und einer Hülle aus elektrisch leitfähig gemachtem Polyethylen bestehen. Die beiden Sensorleitungen und weitere Komponenten des Sensorkabels sind von einer Außenhülle aus einem Geflecht umgeben. Je nachdem, ob elektrisch leitende oder elektrisch nicht-leitende Flüssigkeit detektiert werden soll, werden zwei unterschiedliche Mechanismen ausgenutzt. Im Fall des Eindringens einer elektrisch leitfähigen Flüssigkeit tritt über die leitfähigen Hüllen der beiden Sensorleitungen eine elektrische Verbindung zwischen deren Litzen her, die außerhalb des Kabels gemessen werden kann. Soll elektrisch nicht-leitende Flüssigkeit detektiert werden, wird zwischen den beiden Sensorleitungen eine Trennschicht angeordnet, die isolierend ist, solange sie nicht von zu detektierender Flüssigkeit benetzt wird, und die bei Benetzung mit solcher Flüssigkeit sich entweder auflöst oder elektrisch leitend wird, so daß wieder eine elektrische Verbindung zwischen den Litzen der beiden Sensorleitungen entsteht.

Aus der DE-A-43 09 284 ist ein koaxiales Sensorkabel bekannt, bei welchem ein Innenleiter, der von einer isolierenden Hülle umgeben ist, von einem als Geflecht ausgebildeten Außenleiter mittels eines wendelförmig um die Isolierung des Innenleiters umlaufenden Abstandshalters auf Abstand gehalten wird. Der Außenleiter ist von einer Außenleiterumhüllung umgeben, die von zu selektierender Flüssigkeit veränderbar, beispielsweise auflösbar ist. Die Außenleiterumhüllung wird von einem Außenmantel umgeben, der ebenfalls als Geflecht ausgebildet ist. Tritt zu detektierende Flüssigkeit auf, durchdringt diese den Außenmantel und verändert die Außenleiterumhüllung derart, beispielsweise durch Auflösen, daß die Flüssigkeit durch das Außenleitergeflecht hindurch in den Zwischenraum zwischen dem Außenleiter und der Hülle des Innenleiters eindringen kann. Dies führt zu einer meßbaren Änderung der Impedanz des Sensorkabels.

Aus der DE-A-25 33 257 ist eine Sensorleitung bekannt, die einen Widerstandsdraht, eine den Widerstandsdraht umhüllende Papierisolierung und eine die Papierisolierung umhüllende Kunststoffumwicklung aus auf Lücke gewickeltem Band aus Polytetrafluorethylen (PTFE) aufweist. Dringt durch die Wickellücken zu detektierende Flüssigkeit ein, führt dies zu einer Änderung des Isolationswiderstandes der Papierisolierung. Mittels eines an das Leitungsende angeschlossenen Meßgerätes kann die Änderung dieses Isolationswiderstandes zwischen dem Widerstandsdraht und einem zweiten elektrischen Leiter, beispielsweise in Form eines die Sensorleitung umgebenden metallischen Rohres, gemessen und dadurch ein Leck und die Leckstelle ermittelt werden.

Jede der zuvor genannten Druckschriften offenbart eine Sensorleitung, deren Wirkemechanismus darauf beruht, daß eine Schicht der Sensorleitung von zu detektierender Flüssigkeit verändert wird, um das Vordringen der zu detektierenden Flüssigkeit bis zu einem elektrischen Leiter zu ermöglichen. Solche Sensorleitungen sind nach der Detektion eines Lecks von zu detektierender Flüssigkeit für längere Zeit oder auch endgültig unbrauchbar für weitere Leckageerkennungen.

Aus der EP-A-0 289 257 ist ein koaxiales Sensorkabel bekannt, bei welchem ein als Geflecht ausgebildeter Außenleiter von einem mit einer dielektrischen Schicht umgebenen Innenleiter mittels wendelförmig um die dielektrische Schicht des Innenleiters geführter dielektrischer Abstandselemente auf radialem Abstand gehalten wird. Zwischen den wendelförmigen Abstandselementen sind Lufträume gebildet, so daß der charakteristische Widerstand oder Wellenwiderstand des Sensorkabels wesentlich durch die Dielektrizitätskonstante von Luft bestimmt wird. Im Fall einer Leckage, bei welcher zu detektierende Flüssigkeit durch das durchlässige Geflecht des Außenleiters eindringt, füllen sich die Luftspalte zwischen den Abstandselementen, so daß nun der Wellenwiderstand des Sensorkabels wesentlich durch die Dielektrizitätskonstante der zu detektierenden Flüssigkeit bestimmt wird, die normalerweise deutlich verschieden von der Dielektrizitätskonstanten von Luft ist. Die dadurch hervorgerufene Änderung des Wellenwiderstandes läßt sich am Sensorkabelende mittels einer Meßeinrichtung feststellen. Auch dieses Sensorkabel ist nach dem Detektieren einer Leckage für längere Zeit nicht für das Detektieren einer weiteren Leckage zu benutzen.

Aus der DE-A-35 35 918 ist eine Leckage-Detektionseinrichtung bekannt, die einerseits einen blanken elektrischen Leiter und andererseits ein in einem Abstand zu diesem Leiter parallel angeordnetes Koaxialkabel mit einem Innenleiter, einem durch ein Geflecht gebildeten Außenleiter und einem isolierenden Material dazwischen aufweist. Das Geflecht des Außenleiters besteht aus einem Geflecht aus leitenden Drähten, die mit hydrophilem Garn verwoben sind. Zwischen diesem Außenleiter und dem Innenleiter des Koaxialkabels befindet sich isolierendes Material. Wenn in das hydrophile Geflecht des Außenleiters zu detektierende Flüssigkeit eindringt, ändert sich das elektrische Verhalten des Koaxialkabels. Der blanke Leiter und das Koaxialkabel sind mit Abstand voneinander zwischen zwei Schichten eines Isolierlaminates eingebettet.

Die eine Laminatschicht ist durchgehend flach und dient als Auflage für den blanken Leiter und das Koaxialkabel. Die andere Laminatschicht erstreckt sich etwa halbkreisförmig über den blanken Leiter einerseits und das Koaxialkabel andererseits und liegt ansonsten flach auf der ersten Laminatschicht auf. Die halbkreisförmigen Bereiche der oberen Laminatschicht sind an in Längsrichtung des blanken Leiters bzw. des Koaxialkabels voneinander beabstandeten Stellen mit Öffnungen versehen, in welchen der blanke Leiter bzw. das Koaxialkabel freiliegen.

Tritt zu detektierende, elektrisch leitfähige Flüssigkeit in solcher Menge auf, daß sie den Abstand zwischen blankem Leiter und Koaxialkabel überbrückt und in die über dem blanken Leiter und über dem Koaxialkabel befindlichen Öffnungen der oberen Laminatschicht eindringt, tritt einerseits eine elektrische Überbrückung zwischen dem Außenleiter des Koaxialkabels und dem blanken Leiter auf und ändert sich andererseits der Widerstand, welcher zwischen dem Innenleiter des Koaxialkabels und dem blanken Leiter gemessen werden kann, wobei der Innenleiter und der Außenleiter des Koaxialkabels an einem Ende des Koaxialkabels über einen elektrischen Widerstand miteinander verbunden sind. Mit zwei Meßgeräten, von denen eines den elektrischen Widerstand zwischen dem Außenleiter des Koaxialkabels und dem blanken Leiter und das andere den elektrischen Widerstand zwischen dem Innenleiter des Koaxialkabels und dem blanken Leiter mißt, lassen sich das Vorhandensein von Leckflüssigkeit überhaupt und der Ort des Auftretens von Leckflüssigkeit bestimmen.

Durch die Anordnung der Öffnungen nur oberhalb des Koaxialkabels bzw. des blanken Leiters und deren geschlossene Abdeckung durch die untere Laminatschicht kann nur Leckflüssigkeit detektiert werden, welche in ausreichender Menge auf die Oberfläche der oberen Laminatschicht gelangt. Eine nur die Rückseite des Isolierlaminates, d.h. die nicht mit den Öffnungen versehene Seite des Isolierlaminates erreichende Leckage kann nicht erkannt werden. Dadurch wird nur eine entsprechend einseitige, geringe Detektionsempfindlichkeit erreicht. Bis eine Leckage erkannt wird, muß die auf Leckage zu überwachende Flüssigkeit erst einen solchen Pegelstand erreichen, daß ausreichende Leckageflüssigkeit auf die Oberseite des Isolierlaminat gelangt.

Desweiteren gibt es eine zur Leckageerkennung dienende elektrische Sensorleitung, deren elektrischer Sensorleiter vollständig von einem Isolationsmantel umgeben ist, in den nachträglich durch Perforation Isolationslücken eingebracht worden sind, beispielsweise durch Herausstanzen von Löchern oder durch Herausbrennen von Löchern mittels Laserenergie. Herkömmliche Verfahren zur Herstellung derartiger Sensorleitungen mit Perforation in der Leiterisolation erlauben lediglich, daß auf einer Umfangsseite der Sensorleitung Löcher aus der Leiterisolation herausgestanzt, herausgeschnitten oder herausgebrannt werden. Es ist nur durch eine aufwendige Steuerung möglich, gleichmäßige Lochabstände der Perforation zu erreichen. Durch die hinsichtlich des Leitungsumfangs einseitige Perforation wird auch hier nur eine entsprechend einseitige, geringe Empfindlichkeit erreicht. Die auf Leckage zu überwachende Flüssigkeit muß an dem Umfangsbereich der Sensorleitung auftreten, an welchem sich die durch Perforation erhaltenen Isolationslücken befinden. Bis mit einer derartigen Sensorleitung eine Leckage erkannt werden kann, muß die auf Leckage zu überwachende Flüssigkeit möglicherweise erst einen Pegelstand erreichen, welcher dem Durchmesser der Sensorleitung entspricht, um zu den durch Perforation erhaltenen Isolationslücken gelangen zu können.

Ein Teil einer teilperforierten Sensorleitung für Leckageerkennung ist dargestellt in dem Katalog "Brandes-System, Prinzip und Funktionsbeschreibung" der Firma Brandes, Ausgabe 02/1991.

JP-A-55 149 833 offenbart einen Leckagesensor, der geeignet ist, das Auftreten von Fluiden mit elektrischer Leitfähigkeit zu erkennen. Dieser Sensor umfasst zwei goldplatierte Elektroden, wobei ein Isolationsband wendelförmig mit axialer Wicklungslücke zwischen benachbarten Wicklungswindungen so um die Elektroden gewickelt ist, dass das Isolationsband die Elektroden zumindest teilweise unmittelbar umgibt, und dass Isolationslücken bestehen, in denen die Elektroden von Leiterisolation frei sind.

Zudem wird die umwickelte Struktur mit einem isolierenden Schutzfilm bedeckt, der teilweise so abgeschmolzen wird, dass er axial voneinander beabstandete Isolationsschlauchstücke bildet, zwischen denen, jedenfalls in den vom Isolationsband freien Bereichen, axiale Isolationslücken bestehen, in denen die Elektroden von Leiterisolation völlig frei sind. In vom Isolationsband freien Bereichen, die aber vom isolierenden Schutzfilm bedeckt sind, umgibt der isolierende Schutzfilm die Elektroden unmittelbar.

JP-A-56 053 435 offenbart einen Leckagesensor mit einem Sensorleiter, der geeignet ist, das Auftreten von Fluiden mit elektrischer Leitfähigkeit zu erkennen. Der Sensorleiter besteht aus einem Metalldraht, der unmittelbar von einer isolierenden Beschichtung umgeben ist. Diese isolierende Beschichtung bildet axial voneinander beabstandete Isolationsschlauchstücke, zwischen denen axiale Isolationslücken bestehen, in denen der Metalldraht frei von Leiterisolation ist.

### ZUSAMMENFASSUNG DER ERFINDUNG

Der Erfindung liegt die Aufgabe zugrunde, eine elektrische Sensorleitung zur Erkennung des Auftretens von Fluiden mit elektrischer Leitfähigkeit verfügbar zu machen, die sich mit wenig Aufwand herstellen
läßt, eine gute Rundumempfindlichkeit aufweist und nach einer Leckageerkennung möglichst schnell wieder für eine erneute Leckagedetektion bereit ist.

Dies wird erreicht mit einer elektrischen Sensorleitung gemäß Patentanspruch 1; die sich mit einem erfindungsgemäßen Verfahren gemäß Patentanspruch 8 herstellen lässt. Weiterbildungen hiervon sind in den abhängigen Ansprüchen angegeben.

Die Erfindung schafft eine elektrische Sensorleitung mit einem elektrischen Sensorleiter und mit einer den Sensorleiter umgebenden Leiterisolation, die durch mindestens ein fluidundurchlässiges Isolationsband gebildet ist, das wendelförmig mit axialer Wicklungslücke zwischen benachbarten Wicklungswindungen derart auf den Sensorleiter gewickelt ist, daß Isolationslücken bestehen, in denen der Sensorleiter frei von Leiterisolation ist. Hierfür können herkömmliche Isolationsbänder und herkömmliche Umwicklungsmaschinen verwendet werden.

Somit macht die Erfindung eine elektrische Sensorleitung verfügbar, bei welcher Isolationslücken der fluidundurchlässigen Leiterisolation ohne zusätzlichen Aufwand im Vergleich zu normalen elektrischen Leitungen mit gewickelter Leiterisolation gleich bei der Leitungsherstellung geschaffen werden, und zwar mit einem Sensorleitungsaufbau, der nach dem Auftreten von zu detektierendem Fluid sofort oder mindestens sehr bald wieder für erneute Fluiddetektion bereit ist.

Bei einer Ausführungsform der Erfindung ist die Leiterisolation nicht nur fluidundurchlässig sondern von zu detektierendem Fluid auch nicht benetzbar.

Bei einer Ausführungsform der Erfindung ist die Leiterisolation durch zwei fluidundurchlässige Isolationsbänder gebildet, die mit entgegengesetzter Windungsrichtung je wendelförmig und je mit axialer Wickellücke auf den Sensorleiter derart gewickelt sind, daß an im wesentlichen gleichmäßig über den Leitungsumfang verteilten Überlappungsstellen, an denen sich die Wickellücken der beiden Isolationsbänder überlappen, Isolationslücken bestehen, an denen der Sensorleiter frei von Leitungsisolation ist.

Bei einer Sensorleitung mit nur einem einzigen wendelförmig gewickelten Isolationsband tritt eine kontinuierlich sich wendelförmig um den Leitungsumfang erstreckende Isolationslücke auf. Eine bessere Detektierbarkeit des genauen Ortes, an dem eine Leckage auftritt, erreicht man mit der Sensorleitung, auf welche zwei Isolationsbänder mit unterschiedlichen Windungsrichtungen wendelförmig auf den Sensorleiter gewickelt sind, da in diesem Fall Isolationslücken an genauer definierten Stellen entlang der Sensorleitung vorhanden sind.

Durch die Breite und/oder Wandelsteigung der beiden wendelförmig gewickelten Isolationsbänder kann man den Rasterabstand der Isolationslücken und/oder deren Häufigkeit hinsichtlich der Verteilung um den Leitungsumfang beeinflussen.

Die Leiterisolation auf einen elektrischen Sensorleiter aufzuwickeln, ist gängige Praxis. Um zu einer erfindungsgemäßen Sensorleitung mit Isolationslücken zu kommen, braucht man die Wickelparameter herkömmlicher Wickelmaschinen lediglich so zu ändern, daß die Isolationsbänder mit axialen Wickellücken gewickelt werden. Das heißt, für die Herstellung einer erfindungsgemäßen Sensorleitung ist keinerlei Zusatzaufwand erforderlich, im Gegensatz zu dem Vorgang des Perforierens der Leiterisolation bzw. des Isolierlaminates herkömmlicher Sensorleitungen, die zur Erkennung von Leckagen eingesetzt werden, und auch im Gegensatz zu den Sensorleitungen, die aus den zuvor genannten Druckschriften bekannt sind und alle zusätzliche Sensorleitungselemente und zusätzliche Herstellungsschritte benötigen. Bei Anwendung der Erfindung wird somit ein ganz gewöhnlicher mittels Isolierbändern isolierter Leiter dadurch zu einem Sensorleiter für die Detektion von Fluiden, daß man die Wickelparameter etwas ändert, um zu einer Wicklung mit Wickellücke zu kommen.

Die Erfindung ist jedoch nicht auf Sensorleitungen beschränkt, welche wendelförmig mit Wickellücke gewickelte Isolationsbänder aufweisen. Gemäß einer Ausführungsform der Erfindung kann man eine erfindungsgemäße Sensorleitung auch dadurch herstellen, daß man auf den elektrischen Sensorleiter axial voneinander beabstandete fluidundurchlässige Isolationsschlauchstücke aufbringt, die entweder auf den Sensorleiter aufgewickelt oder durch intermittierende Extrusion aufgebracht werden. Mit intermittierender Extrusion ist hier gemeint, daß der Vorgang des Extrudierens eines schlauchförmigen Isoliermantels auf den elektrischen Sensorleiter periodisch oder im wesentlichen periodisch unterbrochen wird. Auch hierfür gilt, daß herkömmliche Wickel bzw. Extruder verwendet werden können, für die Herstellung der Isolationslücken somit keinerlei zusätzlichen Geräte und Verfahrensschritte erforderlich sind, sondern lediglich eine etwas andere Steuerung der herkömmlichen Wickel- bzw. Extrudermaschine.

Im Zusammenhang sowohl mit gewickelter als auch mit extrudierter Leiterisolation kann es für besondere Anwendungszwecke vorteilhaft sein, Isolationslücken nichtperiodischen Abstandes entlang der Sensorleitung zu erzeugen. Für die meisten Anwendungsfälle wird man jedoch Isolationslücken mit periodischem Abstand voneinander bevorzugen.

Es gibt Ausführungsformen, bei welchen der Sensorleiter in den Isolationslücken freiliegt, und Ausführungsformen, bei welchen sich zwischen dem elektrischen Sensorleiter und der Leiterisolation eine den Sensorleiter umgebende Filterschicht befindet, die in den Isolationslücken freiliegt und die eine definierte Durchlässigkeit nur für vorbestimmte Fluide aufweist.

Für den Fall, daß der elektrische Sensorleiter in den Isolationslücken freiliegt, zeigt er das Vorhandensein jeglichen Fluids mit elektrischer Leitfähigkeit an, beispielsweise das Auftreten von üblichem Wasser, Säure usw. Durch Anordnen einer Filterschicht zwischen dem elektrischen Sensorleiter und der Leiterisolation kann man eine definierte Durchlaßfähigkeit für nur ausgewählte Fluide elektrischer Leitfähigkeit schaffen. Das heißt, Fluide elektrischer Leitfähigkeit, welche auf die in den Isolationslücken freiliegende Filterschicht auftreffen, können nur dann zum elektrischen Sensorleiter vordringen und eine elektrische Anzeige des Vorhandenseins eines solchen Fluids bewirken, wenn die Filterschicht für ein derartiges Fluid durchlässig ist. Dadurch ist es möglich, spezielle Fluide zu detektieren, ohne eine generelle Anzeige zu erhalten, wenn irgendeine Substanz elektrischer Leitfähigkeit vorhanden ist.

Für die Filterschicht können spezielle Folien, beispielsweise aus gerecktem, mikroporösem PTFE (Polytetrafluorethylen), wie es unter der Markenbezeichnung GORE-TEX bekannt ist, verwendet werden, die eine definierte Durchlaßfähigkeit beispielsweise für Öl, Wasser oder andere bestimmte Flüssigkeiten oder Gase aufweisen. Solche Folien können in Bandform auf den elektrischen Sensorleiter aufgewickelt werden, bevor das Isolationsband oder die Isolationsbänder, welche die fluidundurchlässige Leiterisolation bilden, gewickelt oder extrudiert werden. Dabei wird das Bandmaterial für die Filterschicht in vollständig bedeckender Weise auf den Sensorleiter gewickelt.

Ein Vorteil einer erfindungsgemäßen Sensorleitung mit einem oder mehr als einem gewickelten Isolationsband besteht darin, daß durch die Wickeltechnik sowohl der Abstand der Isolationslücken genau definiert werden kann als auch die Isolationslücken um den gesamten Leiterumfang herum verteilt werden können. Daher wird eine höhere Empfindlichkeit durch Zugang zu überwachender Fluide von beiden oder mehreren Seiten der Sensorleitung aus erreicht. Ähnliches gilt für eine erfindungsgemäße Sensorleitung mit intermittierend extrudierter Leiterisolation.

Ein Einsatzzweck einer elektrischen Sensorleitung besteht in der Erkennung einer Leckage des zu überwachenden Fluids. Es sind aber auch andere Einsatzmöglichkeiten denkbar, bei welchen das Auftreten eines zu überwachenden Fluids erkannt werden soll.

Eine elektrische Sensorleitung der erfindungsgemäßen Art kann man zur Herstellung eines Sensorkabels verwenden, mit dem der Ort des Auftretens einer Leckage bestimmt werden kann. Ein solches Sensorkabel kann zwei parallele Sensorleitungen erfindungsgemäßer Art und zusätzlich zwei parallele Referenzleitungen aufweisen. Die Referenzleitungen sind von den zu erkennenden Fluiden nicht beeinflußbar, beispielsweise weil ihr elektrischer Sensorleiter vollständig von Isolationsmaterial umschlossen ist, welches für die zu überwachenden Fluide nicht durchlässig ist.

Unter Verwendung eines derartigen Sensorkabels kann man eine Detektoranordnung zum Erkennen des Auftretens von zu überwachenden Fluiden elektrischer Leitfähigkeit aufbauen. Dabei ist ein Ende eines solchen Sensorkabels an eine elektrische Meßvorrichtung angeschlossen, vorwiegend in Form einer elektrischen Meßbrücke, und sind die beiden erfindungsgemäßen Sensorleitungen einerseits und die beiden Referenzleitungen andererseits am anderen Ende des Sensorkabels je miteinander verbunden, entweder kurzschlußmäßig oder über einen definierten elektrischen Widerstand, dessen Größe von der an das andere Ende des Sensorkabels angeschlossenen Meßvorrichtung abhängt.

Im Fall der Verwendung einer Widerstandsmeßbrücke ist diese abgestimmt, zeigt also kein Ausgangssignal bzw. ein Null-Ausgangssignal, wenn entlang des Sensorkabels kein Fluid elektrischer Leitfähigkeit vorhanden ist. Tritt an irgendeiner Stelle entlang des Sensorkabels ein zu überwachendes Fluid auf, bildet sich an dieser Stelle eine elektrische Brücke zwischen den beiden erfindungsgemäßen Sensorleitungen und ändern sich die Widerstandsverhältnisse an der Widerstandsmeßbrücke. Aus dieser Änderung kann man ermitteln, an welcher Stelle entlang des Sensorkabels zu überwachendes Fluid aufgetreten ist.

Sowohl die erfindungsgemäße Sensorleitung mit Isolationslücken als auch die Referenzleitung können mit elektrischen Leitern entweder massiver Art oder in Form von Litzenleitern aufgebaut sein. Dabei können diese Leiter aus üblichen Materialien bestehen, beispielsweise aus Kupfer, nickelplattiertem Kupfer, zinnplattiertem Kupfer, silberplattiertem Kupfer, zinnplattierten Legierungen, silberplattierten Legierungen oder Kupferlegierungen.

Für die Leiterisolation geeignete Materialien sind Polyester, Perfluoralkoxy, Fluorethylen-Propylen, Polyolefine einschließlich Polyethylen und Polypropylen, Polymethylpenten und Polytetrafluortheylen oder expandiertes Polytetrafluorethylen. Bevorzugt besteht die Leiterisolation aus einem Fluorpolymer und ganz besonders bevorzugt besteht sie aus expandiertem Polytetrafluorethylen (ePTFE). Bei mehrlagiger Leiterisolation bestehen vorzugsweise alle Leiterisolationslagen ePTFE. Die Leiterisolation kann auch aus einem extrudierten Polymer oder einem geschäumten Polymer bestehen.

Expandiertes PTFE ist als Leiterisolationsmaterial vorteilhaft aufgrund seiner sehr niedrigen Dielektrizitätskonstanten und seines geringen Gewichts. Ersteres führt zu äußerst guten elektrischen Eigenschaften der Leitung und eines damit aufgebauten Kabels und letzteres erlaubt eine leichte Handhabung der Leitung bzw. des damit aufgebauten Kabels.

Außerdem haben mit ePTFE aufgebaute Leitungen und Kabel gute Eigenschaften hinsichtlich der Biegebeanspruchungslebensdauer.

Während bei allen aus den oben genannten Druckschriften bekannten Sensorleitungen eine Schicht vorhanden ist, welche das zu detektierende Fluid aufnimmt und dadurch in ihrem elektrischen Verhalten verändert wird, und/oder der elektrische Leiter oder Innenleiter der Sensorleitung von einer lückenlosen Isolierschicht aus einem fluidundurchlässigen Isoliermaterial gegenüber dem zu detektierenden Fluid vollständig abgeschirmt ist, ist bei einer erfindungsgemäßen Sensorleitung das Material der Leiterisolation fluidundurchlässig und ist eine Veränderung der elektrischen Wirkung des Leiterisolationsmaterials durch das zu detektierende Fluid nicht vorgesehen, während das zu detektierende Fluid durch die Leiterisolationslücken direkt oder durch eine für das zu detektierende Fluid selektiv durchlässige Filterschicht hindurch bis zum Sensorleiter vordringt und dadurch festgestellt und entlang der Sensorleitung lokalisiert wird.

### KURZBESCHREIBUNG DER ZEICHNUNGEN

Die Erfindung sowie weitere Aufgabenaspekte und Vorteile der Erfindung werden nun anhand von Ausführungsformen näher erläutert. In den Zeichnungen zeigen:
- Fig. 1: eine Seitenansicht einer ersten Ausführungsform einer erfindungsgemäßen Sensorleitung;
- Fig. 2: eine zweite Ausführungsform einer erfindungsgemäßen Sensorleitung in Perspektivdarstellung;
- Fig.3: eine aus dem Stand der Technik bekannte Sensorleitung in Perspektivdarstellung;
- Fig. 4: ein Sensorkabelstück in perspektivischer Darstellung;
- Fig. 5: ein Beispiel einer zur Leckageerkennung verwendbaren Kabelanordnung; und
- Fig. 6: ein einfaches Beispiel einer Widerstandsmeßbrücke.

### DETAILLIERTE BESCHREIBUNG BEVORZUGTER AUSFÜHRUNGSFORMEN

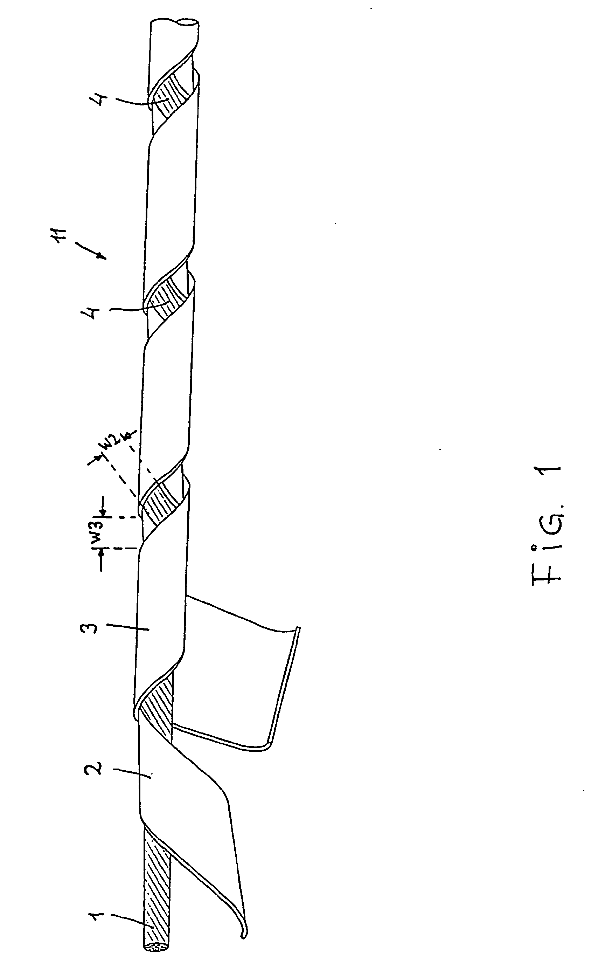

Fig. 1 zeigt in Seitenansicht eine erfindungsgemäße Sensorleitung 11 mit einem elektrischen Sensorleiter 1 in Form eines Litzenleiters und zwei je wendelförmig gewickelten, fluidundurchlässigen Isolationsbändem in Form einer innenliegenden Linkswickellage 2 und einer außen liegenden Rechtswickellage 3. Die Wickelrichtungen links und rechts sind dabei auf eine Blickrichtung in Leitungslängsrichtung von der rechten Seite in Fig. 1 aus bezogen. Jedes der beiden Isolationsbänder ist mit einer Wicklungslücke zwischen benachbarten Wicklungswindungen gewickelt, wobei in Fig. 1 die Wicklungslücke zwischen benachbarten Wicklungswindungen der Linkswickellage 2 mit W2 und die Wicklungslücke zwischen benachbarten Wicklungswindungen der Rechtswickellage 3 mit W3 bezeichnet ist. Die Wicklungslücken W2 und W3 überlappen sich an Isolationslücken 4, an denen der Sensorleiter 1 freiliegt. Durch Parameter wie Isolationsbandbreite jedes der beiden Isolationsbänder, Wicklungslücken W2, W3 und Wicklungssteigung kann man die Positionen, an welchen Isolationslücken 4 bezüglich des Leitungsumfangs und bezüglich der Leitungslängserstreckung auftreten, beeinflussen. Man kann beispielsweise zu Konfigurationen kommen, bei denen Isolationslücken 4 nur an diametral gegenüberliegenden Seiten des Leitungsumfangs auftreten oder an mehr als zwei Stellen um den Leitungsumfang verteilt. Durch Wahl des Abstandsrasters der Isolationslücken 4 in Leitungslängsrichtung kann man die Empfindlichkeitsauflösung der Sensorleitung in ihrer Längsrichtung beeinflussen. Je mehr Isolationslücken 4 pro Längeneinheit der Sensorleitung vorgesehen sind, umso höher ist die Auflösung hinsichtlich der Erfassung des Ortes, an dem zu überwachendes Fluid auftritt.

Bei einem praktische Beispiel der Erfindung wird eine Sensorleitung dadurch hergestellt, daß eine Leiterisolation in zwei Wickelvorgängen auf einen elektrischen Leiter 1 gewickelt wird. Hierfür wird ein Leiterdraht mit einem Durchmesser von etwa 1.2 mm verwendet.

In einem ersten Wickelvorgang wird auf den Leiterdraht ein erstes Isolationsband 2 aus fluidundurchlässigem ePTFE gewickelt, das eine Breite von etwa 4 mm und sowohl vor als auch nach dem Wickelvorgang eine Dicke von etwa 0,15 mm aufweist. Das Wickeln geschieht mit einem Wickelwinkel von 13,12° gegenüber der Längsachse des Leiterdrahtes. Nach diesem Wickelvorgang ist die Oberfläche des Leiterdrahtes zu 90% mit dem ersten Isolationsband 2 bedeckt. Der Leiterdraht und das daraufgewickelte erste Isolationsband 2 haben einen Gesamtdurchmesser von etwa 1,5 mm.

In einem zweiten Wickelvorgang wird ein zweites Isolationsband 3 über das erste Isolationsband 2 gewickelt. Hierfür wird ein Band aus fluidundurchlässigem ePTFE verwendet, das die gleichen Abmessungen wie das erste Isolationsband 2 aufweist, jedoch mit einem Wickelwinkel von 15,21° gewickelt wird.

Nach diesem Wickelvorgang ist die Oberfläche der Einheit aus Leiterdraht und erstem Isolationsband 2 zu 93% mit dem zweiten Isolationsband 3 bedeckt. Der Leiterdraht und die daraufgewickelten Isolationsbänder 2 und 3 haben einen Gesamtdurchmesser von etwa 1,8 mm.

Die so entstandene Sensorleitung 11 weist in axialer Richtung etwa alle 4 mm eine Isolationslücke 4 auf.

Bei einer Abwandlung der in Fig. 1 dargestellten Ausführungsform wird auf den Sensorleiter 1 nur ein einziges fluidundurchlässiges Isolationsband wendelförmig aufgewickelt, und zwar wieder mit Wicklungslücke zwischen benachbarten Wicklungswindungen. In diesem Fall ergibt sich eine Isolationslücke, die sich kontinuierlich wendelförmig um den Sensorleiter 1 windet und einer der Wicklungslücken W1 oder W2 in Fig. 1 entspricht.

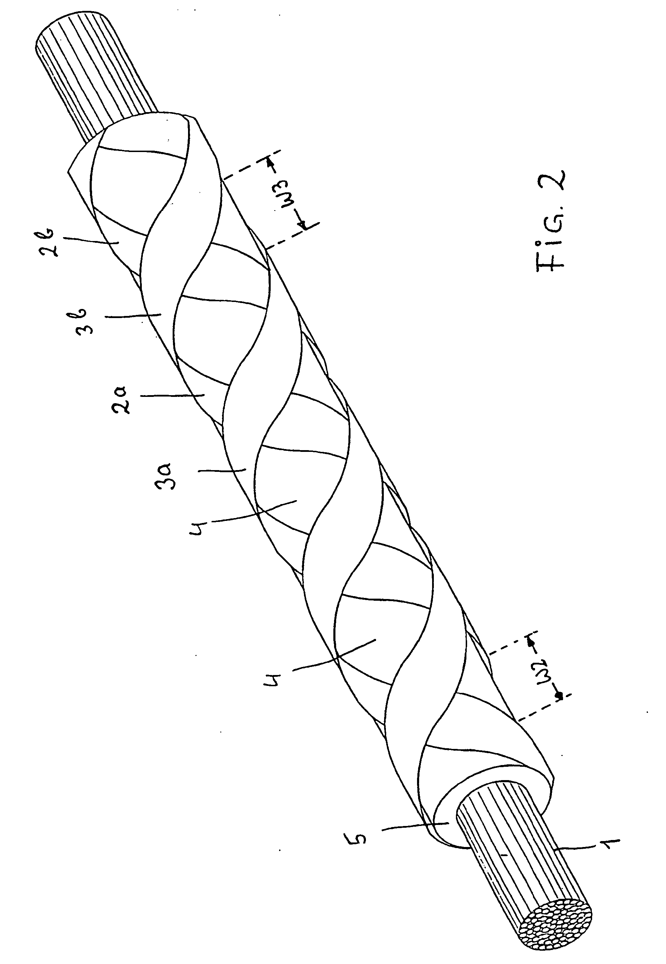

In Fig. 2 ist eine Ausführungsform einer erfindungsgemäßen Sensorleitung dargestellt, bei welcher für jede der beiden Wickellagen je zwei mit axialem Abstand nebeneinander gewickelte fluidundurchlässige Isolationsbänder verwendet werden, nämlich zwei Linkswickellagen 2a, 2b und zwei Rechtswickellagen 3a, 3b. In diesem Fall ergeben sich mehr Isolationslücken 4 in Leitungslängsrichtung und um den Leitungsumfang herum verteilt.

Die in Fig. 2 dargestellte Ausführungsform unterscheidet sich von der in Fig. 1 gezeigten Ausführungsform noch dadurch, daß zwischen dem Sensorleiter 1 und den fluidundurchlässigen Wickellagen 2a, 2b und 3a, 3b eine Filterschicht 5 vorgesehen ist, welche den Sensorleiter 1 vollständig umschließt und an den Stellen der Isolationslücken 4 freiliegt. Bei der Filterschicht 5 handelt es sich beispielsweise um eine gewickelte Lage aus gerecktem, mikroporösem PTFE mit definierter Durchlässigkeit für Öle, Wasser oder andere vorbestimmte Flüssigkeiten oder Gase.

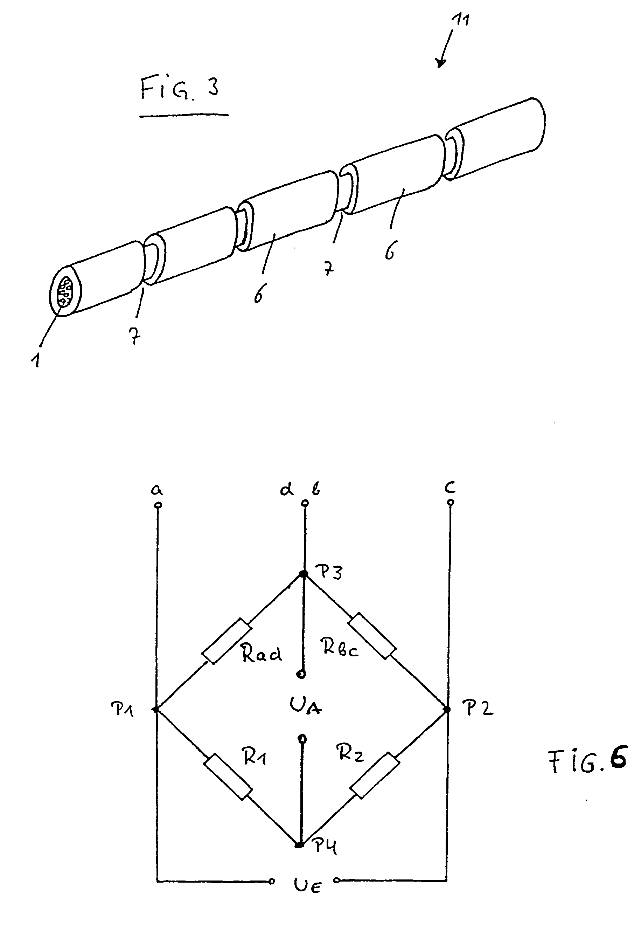

Fig. 3 zeigt eine aus dem Stand der Technik bekannte Sensorleitung mit einer Leiterisolation in Form von schlauchförmigen fluidundurchlässigen Isolationstücken 6 mit axialen Isolationslücken 7 zwischen den einzelnen Isolationsschlauchstücken 6. Die einzelnen Isolationsschlauchstücke 6 können entweder durch Wickeln erzeugt worden sein oder durch intermittierendes Extrudieren. Bei letzterem Vorgang wird der Vorgang des Extrudierens von Isolationsmaterial auf den Sensorleiter 1 wiederholt unterbrochen, um die Isolationslücken 7 herzustellen. Die axiale Länge der einzelnen Isolationsschlauchstücke 6 kann gleichmäßig oder unterschiedlich sein, je nachdem, welche Empfindlichkeitscharakteristik man mit der Sensorleitung 11 erreichen möchte.

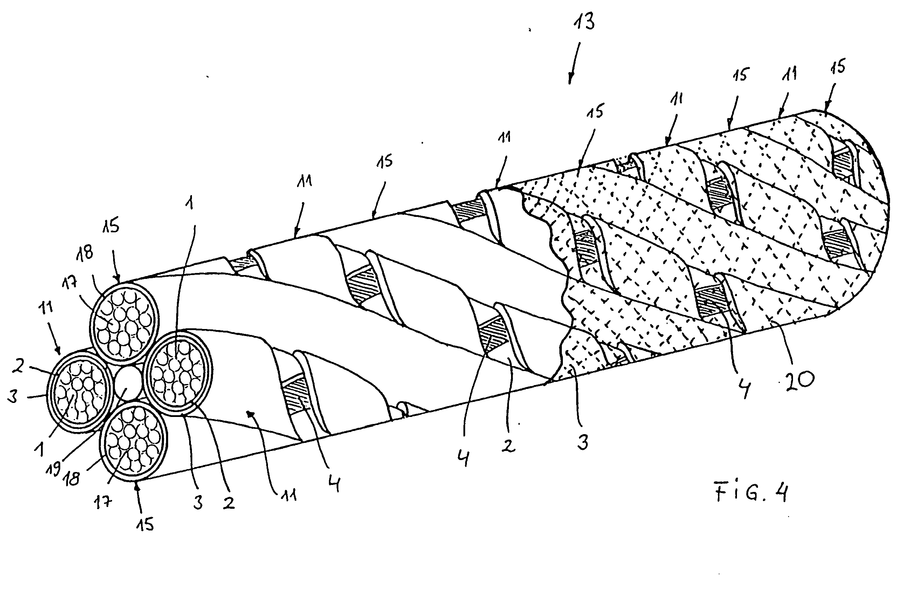

In Fig. 4 ist ein Beispiel eines Sensorkabels 13 in perspektivischer Darstellung und mit schematischer Querschnittsansicht gezeigt. Ein solches Sensorkabel umfaßt zwei Sensorleitungen 11 des in Fig. 1 gezeigten Aufbaus mit Isolationslücken 4 und zwei Referenzleitungen 15, die je einen elektrischen Referenzleiter 17 und eine diesen vollständig ummantelnde, fluidundurchlässige Referenzleiterisolation 18 aufweisen. Die beiden Sensorleitungen 11 und die beiden Referenzleitungen 15 sind je paarweise diagonal zueinander angeordnet, wobei sich in der Mitte zwischen den vier Leitungen 11, 15 ein Füller 19 befindet. Das Sensorkabel 13 ist auf seinem Umfang mit einem schlauchartigen Schutznetz oder Schutzgeflecht 20 versehen, mittels welchem die vier Leitungen 11 und 15 des Sensorkabels zusammengehalten und geschützt werden. Das Schutzgeflecht 20 ist für das zu überwachende Fluid durchlässig, so daß das Fluid zu den Isolationslücken 4 vordringen kann. Das Schutzgeflecht 20 kann mit Materialien wie Polyamid (Nylon), KEVLAR (Warenzeichen) oder ePTFE (expandiertes Polytetrafluorethylen) aufgebaut sein.

Das Schutzgeflecht 20 erstreckt sich über die gesamte Länge des Sensorkabels 13. In Fig. 4 ist das Schutzgeflecht 20 trotzdem nur auf einem Teil der Länge des Sensorkabels 13 dargestellt, um im Restteil den Aufbau der einzelnen Leitungen 11 und 15 besser sichtbar zu lassen.

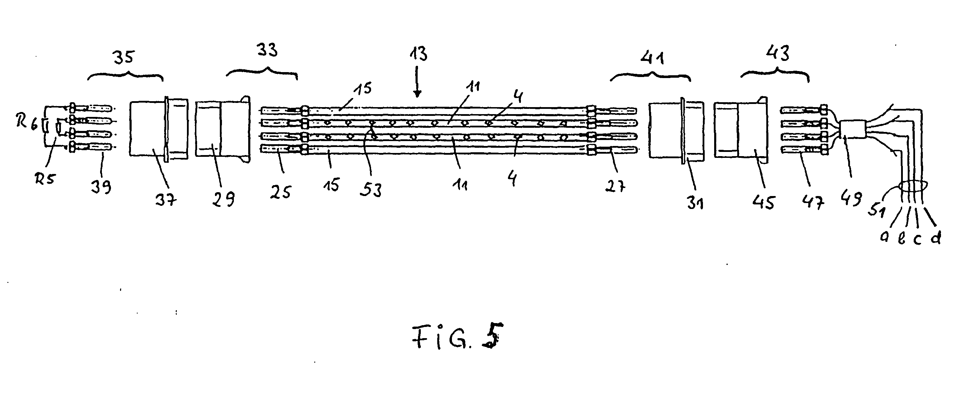

Fig. 5 zeigt in schematisierter Darstellung eine Kabelanordnung für eine Meßeinrichtung zur Leckageerkennung. Diese Kabelanordnung umfaßt ein Sensorkabel 13 mit dem in Fig. 4 gezeigten Aufbau, wobei der Übersichtlichkeit und Einfachheit halber die vier Leitungen 11, 15 des Sensorkabels 13 als nebeneinanderliegend dargestellt sind, während sie in Wirklichkeit in der in Fig. 4 angedeuteten Weise verdrillt sind. Es besteht aber auch die Möglichkeit, die vier Leitungen 11, 15 des Sensorkabels 13 tatsächlich in der in Fig. 5 dargestellten Weise unverdrillt parallel nebeneinander verlaufen zu lassen. In Fig. 5 ist eine Aufreihungsrichtung dargestellt, bei welcher sich in der Mitte zwei erfindungsgemäße Sensorleitungen 11 mit Isolationslücken 4 befinden, während die beiden Referenzleitungen 15 die Außenseite dieses Sensorkabels 13 bilden. Es ist jedoch auch eine andere Aufreihung der vier Leitungen 11, 15 möglich, beispielsweise die in Fig. 4 gezeigte, bei welcher immer abwechselnd eine Sensorleitung 11 und eine Referenzleitung 15 aufeinanderfolgen. Die Isolationslücken 4 sind in Fig. 5 nur rein schematisch angedeutet.

Die vier Leitungen 11, 15 des Sensorkabels 13 der Fig. 5 sind an ihren in Fig. 5 linken Enden mit Buchsenkontakten 25 und an ihren in Fig. 5 rechten Enden mit Steckkontakten 27 abgeschlossen. Die Buchsenkontakte 25 werden von einem Buchsengehäuse 29 aufgenommen, während die Steckkontakte 27 von einem Steckergehäuse 31 aufgenommen werden. Die Buchsenkontakte 25 und das Buchsengehäuse 29 bilden einen Buchsenverbinder 33, der mit einem Gegensteckverbinder 35 in Steckverbindung bringbar ist, der ein Gegensteckverbindergehäuse 37 und darin aufnehmbare Gegenstiftkontakte 39 umfaßt. Die Gegenstiftkontakte 39 sind an Abschlußwiderstände R5 und R6 angeschlossen, die beispielsweise einen Widerstandswert von je 10 kΩ aufweisen, wobei R5 zum Abschließen der beiden Sensorleitungen 11 und R6 zum Abschließen der beiden Referenzleitungen 15 dient.

Die Steckkontakte 27 und das Steckergehäuse 31 bilden einen Steckverbinder 41, der in Steckverbindung mit einem Gegenbuchsenverbinder 43 bringbar ist, der ein Gegenbuchsenverbindergehäuse 45 und Gegenbuchsenkontakte 47 aufweist. Die Gegenbuchsenkontakte 47 sind an ein Ende eines Zuleitungskabels 49 angeschlossen, dessen anderes Ende mit Anschlußdrähten 51 verbunden ist, die zu einem in Fig. 5 nicht dargestellten Meßgerät mit Meßanzeigevorrichtung führen.

Aufgrund ihrer Leitungswiderstände haben sowohl die Sensorleitungen 11 als auch die Referenzleitungen 15 einen definierten elektrischen Widerstand, der zusammen mit dem jeweiligen Abschlußwiderstand R5 bzw. R6 über ein an die Anschlußdrähte 51 angeschlossenes Meßgerät gemessen werden kann. Tritt an einer Stelle entlang des Kabels 13 eine Leckage eines Fluids mit elektrischer Leitfähigkeit auf, was in Fig. 5 bei 53 angedeutet ist, werden die elektrischen Leiter 1 der beiden Sensorleitungen 11 an dieser Stelle elektrisch überbrückt. Der elektrische Widerstand, der zwischen den beiden Steckkontakten 27, die mit den Sensorleitungen 11 verbunden sind, gemessen werden kann, weicht daher von demjenigen Widerstand ab, der bei nicht vorhandener Leckage gemessen wird. Anhand der gemessenen Widerstandsänderung kann man die Stelle der ersten Leckage im überwachten System feststellen.

An sich würde es ausreichen, zur Leckageerkennung und zur Ermittlung der Leckagestelle nur die beiden Sensorleitungen 11 mit Isolationslücken 4 zu verwenden. In diesem Fall würden absolute Widerstandsänderungen gemessen.

Bevorzugt wird eine Meßanordnung, deren Sensorkabel 13 in der in den Fig. 4 und 6 dargestellten Weise ein Paar Sensorleitungen 11 und ein Paar Referenzleitungen 15 aufweist und eine Widerstandmeßbrücke der in Fig. 6 dargestellten Weise benutzt. In diesem Fall kommt es zu der Messung von relativen Widerstandsänderungen der beiden Sensorleitungen 11 gegenüber den beiden Referenzleitungen 15, so daß Störeinflüsse, die sich auf alle vier Leitungen 11, 15 auswirken, beispielsweise Temperatureinflüsse, ohne Einfluß bleiben.

In Fig. 6 ist ein Beispiel einer an sich bekannten Widerstandsbrücke dargestellt, an welche ein erstes Ende eines Sensorkabels 13 der in Fig. 4 oder der in Fig. 5 gezeigten Art angeschlossen werden kann. Bei der Kabelanordnung in Fig. 5 sind die vier Anschlußdrähte 51 mit a - d gekennzeichnet, wobei die Anschlußdrähte a und d mit den beiden Referenzleitungen 15 und die Anschlußdrähte b und c mit den beiden Sensorleitungen 11 verbunden sind, wenn die Verbinder 41 und 43 in Steckverbindung sind.

Die in Fig. 6 dargestellte Widerstandsmeßbrücke weist ein erstes Paar Diagonalschaltungspunkte P1 und P2 auf, welche einerseits mit einer Eingangsspannung U_{E} beaufschlagt werden und an welche andererseits die Anschlußdrähte a und c der Fig. 5 anschließbar sind. Außerdem weist die Widerstandsmeßbrücke ein zweites Paar Diagonalschaltungspunkte P3 und P4 auf, von welchen eine Ausgangsspannung U_{A} abnehmbar ist. An P3 sind überdies die Anschlußdrähte b und d der Fig. 5 anschließbar.

Ein elektrischer Widerstand Rad in Fig. 6 stellt beispielsweise die Summe der Leitungswiderstände der beiden Sensorleitungen 11 und des deren Sensorleiter 1 an einem zweiten Ende des Sensorkabels 13 verbindenden Abschlußwiderstandes R5 dar. Ein Widerstand Rbc stellt beispielsweise eine Summe der Leitungswiderstände der beiden Referenzleitungen 15 und des deren beide Referenzleiter 17 am zweiten Ende des Sensorkabels 13 verbindenden Abschlußwiderstandes R6 dar. Widerstände R1 und R2 sind in der Meßvorrichtung untergebrachte Widerstände der Widerstandsbrücke.

Die Meßanordnung wird nun so ausgelegt, daß die Widerstandsbrücke abgeglichen ist, das heißt bei Einspeisung einer Eingangsspannung U_{E} eine Ausgangspannung U_{A} gleich Null auftritt, wenn entlang des Sensorkabels 13 kein zu detektierendes Fluid auftritt, sich somit die Leitungswiderstände der Sensorleiter 1 über die gesamte Länge des Sensorkabels 13 auswirken. Ist jedoch an irgendeiner Stelle entlang des Sensorkabels 13 ein Fluid elektrischer Leitfähigkeit vorhanden, welches die beiden Sensorleiter 1 des Sensorkabels 13 elektrisch überbrückt, verringert sich der Wert des entsprechenden Widerstandes, im genannten Beispiel der Wert des Widerstandes Rad, der Widerstandsbrücke. Als Folge davon tritt eine Ausgangsspannung U_{A} auf, deren Wert eine Aussage über den Ort des Auftretens des Fluids elektrischer Leitfähigkeit zuläßt.

Bei praktischen Anwendungen kann das Sensorkabel 13 eine Länge von etwa 1000 m haben. Die Sensorleitung 11 kann auch größere Längen aufweisen.

## Patentansprüche

1. Elektrische Sensorleitung (11) zur Erkennung des Auftretens von Fluiden mit elektrischer Leitfähigkeit,
mit einem elektrischen Sensorleiter (1)
und mit einer den Sensorleiter (1) unmittelbar umgebenden fluidundurchlässigen Leiterisolation, die durch mindestens zwei Isolationsbänder (2,3;2a,2b,3a,3b) gebildet ist, die mit entgegengesetzter Windungsrichtung je wendelförmig und je mit axialer Wickellücke (W2,W3) auf den Sensorleiter (1) derart gewickelt sind, daß an über den Leitungsumfang verteilten Überlappungsstellen, an denen sich die Wickellücken (W2,W3) der beiden fluidundurchlässigen Isolationsbänder (2,3;2a,2b,3a,3b) überlappen, Isolationslücken (4) bestehen, an denen der Sensorleiter (1) frei von Leitungsisolation ist.

2. Sensorleitung nach Anspruch 1, bei welcher mindestens zwei sich in etwa diametral gegenüberliegende Isolationslücken (4) über den Leitungsumfang verteilt sind.

3. Sensorleitung nach Anspruch 1 oder 2, bei welcher die fluidundurchlässigen Isolationsbänder (2,3;2a,2b,3a,3b) gleiche Bandbreite haben.

4. Sensorleitung nach einem der Ansprüche 1 bis 3, bei welcher die fluidundurchlässigen Isolationsbänder (2,3;2a,2b,3a,3b) mit gleicher Windungssteigung gewickelt sind.

5. Sensorleitung nach einem der Ansprüche 1 bis 4, bei welcher der Sensorleiter (1) in den Isolationslücken (4) freiliegt.

6. Sensorleitung nach einem der Ansprüche 1 bis 4, bei welcher zwischen dem Sensorleiter (1) und der fluidundurchlässigen Leiterisolation eine den Sensorleiter (1) umgebende Filterschicht (5) angeordnet ist, die in den Isolationslücken (4) freiliegt und eine definierte Durchlässigkeit nur für vorbestimmte Fluide aufweist.

7. Sensorkabel (13) mit zwei nebeneinander verlaufenden Sensorleitungen (11) nach einem der Ansprüche 1 bis 6 und mit zwei neben den Sensorleitungen (11) verlaufenden Referenzleitungen (15), die von den zu erkennenden Fluiden nicht beeinflußbar sind.

8. Verfahren zur Herstellung einer elektrischen Sensorleitung (11) zur Erkennung des Auftretens von Fluiden mit elektrischer Leitfähigkeit, mit folgenden Schritten: es wird ein elektrischer Leiter (1) hergestellt;
es werden mindestens zwei fluidundurchlässige Isolationsbänder (2,3;2a,2b,3a,3b) mit entgegengesetzter Windungsrichtung je wendelförmig und je mit axialer Wickellücke (W2,W3) übereinanderliegend auf den Leiter (1) derart gewickelt, daß an im wesentlichen gleichmäßig über den Leitungsumfang verteilten Überlappungsstellen, an denen sich die Wickellücken (W2,W3) der beiden fluidundurchlässigen Isolationsbänder (2,3;2a,2b,3a,3b) überlappen,
Isolationslücken (4) entstehen, an denen der Sensorleiter frei von Leitungsisolation bleibt.

9. Verfahren nach Anspruch 8, bei welchem mindestens zwei sich in etwa
diametral gegenüberliegende Isolationslücken (4) über den Leitungsumfang verteilt werden.

10. Verfahren nach Anspruch 8 oder 9, bei welchem fluidundurchlässige Isolationsbänder (2,3;2a,2b,3a,3b) mit gleicher Bandbreite auf den Leiter (1) gewickelt werden.

11. Verfahren nach einem der Ansprüche 8 bis 10, bei welchem die fluidundurchlässigen Isolationsbänder (2,3;2a,2b,3a,3b) mit gleicher Wendelsteigung gewickelt werden.

12. Verfahren nach einem der Ansprüche 8 bis 11, bei welchem der Sensorleiter (1) in den Isolationslücken (4) frei gelassen wird.

13. Verfahren nach einem der Ansprüche 8 bis 11, bei welchem zwischen dem Sensorleiter (1) und der fluidundurchlässigen Leiterisolation eine den Sensorleiter (1) umgebende Filterschicht (5) angeordnet wird, die in den Isolationslücken (4) freibleibt und eine definierte Durchlässigkeit nur für vorbestimmte Fluide aufweist.

14. Detektoranordnung zum Erkennen des Auftretens von Fluiden elektrischer Leitfähigkeit,
mit einem Sensorkabel (13) nach Anspruch 7 und mit einer Auswerteeinrichtung, die ausgebildet ist für die Erfassung einer Veränderungen des elektrischen Verhaltens des Sensorkabels (13).

15. Detektoranordnung nach Anspruch 14, wobei die Auswerteeinrichtung als Widerstandsbrückenschaltung (Rad,Rbc,R1,R2) ausgebildet ist, umfassend
ein erstes Paar Diagonalschaltungspunkte (P1, P2), an welche eine (c) der beiden Sensorleitungen (b, c) und eine (a) der beiden Referenzleitungen (a, d) angeschlossen sind und welches für das Anlegen einer Eingangsspannung (U_{E}) ausgebildet ist,
und ein zweites Paar Diagonalschaltungspunkte (P3, P4), an welche die zweite (b) der beiden Sensorleitungen (b, c) und die zweite (d) der beiden Referenzleitungen (a, d) angeschlossen sind und welches für das Abnehmen einer Ausgangsspannung (U_{A}) ausgebildet ist

## Claims

1. An electric sensor line (11) for detecting the presence of electroconductive fluids, comprising
an electric sensor conductor (1)
and a fluid-impermeable conductor insulation which directly surrounds the sensor conductor (1) and is constituted by at least two insulation bands (2, 3; 2a, 2b, 3a, 3b) each helically wound on the sensor conductor (1) in opposite winding directions with an axial winding gap (W2, W3) each, such that at overlapping locations distributed over the line circumference, where the winding gaps (W2, W3) of the two fluid-impermeable insulation bands (2, 3; 2a, 2b, 3a, 3b) overlap, there are insulation gaps (4) present at which the sensor conductor (1) is free from line insulation.

2. A sensor line according to claim 1,
wherein at least two approximately diametrically opposite insulation gaps (4) are distributed over the line circumference.

3. A sensor line according to claim 1 or 2,
wherein the fluid-impermeable insulation bands (2, 3: 2a, 2b, 3a, 3b) have the same band width.

4. A sensor line according to any of claims 1 to 3,
wherein the fluid-impermeable insulation bands (2, 3; 2a, 2b, 3a, 3b) are wound with the same winding pitch.

5. A sensor line according to any of claims 1 to 4,
wherein the sensor conductor (1) is exposed in the insulation gaps (4).

6. A sensor line according to any of claims 1 to 4,
wherein a filter layer (5) surrounding the sensor conductor (1) is arranged between said sensor conductor (1) and said fluid-impermeable conductor insulation, said filter layer (5) being exposed in said insulation gaps (4) and having a defined permeability for predetermined fluids only.

7. A sensor cable (13) comprising two juxtaposed sensor lines (11) according to any of claims 1 to 6 and two reference lines (15) extending beside said sensor lines (11), said reference lines (15) being not subject to the influence of the fluids to be detected.

8. A method of manufacturing an electric sensor line (11) for detecting the presence of electroconductive fluids, said method comprising the following steps:
manufacturing an electric conductor (1);
winding at least two fluid-impermeable insulation bands (2, 3; 2a, 2b, 3a, 3b) in superimposed manner and in opposite winding directions each in helical manner and with an axial winding gap (W2, W3) each on said conductor (1), such that at overlapping locations distributed substantially uniformly over the line circumference, where the winding gaps (W2, W3) of the two fluid-impermeable insulation bands (2, 3; 2a, 2b, 3a, 3b) overlap, there are created insulation gaps (4) at which the sensor conductor (1) remains free from line insulation.

9. A method according to claim 8,
wherein at least two approximately diametrically opposite insulation gaps (4) are distributed over the line circumference.

10. A method according to claim 8 or 9,
wherein fluid-impermeable insulation bands (2, 3; 2a, 2b, 3a, 3b) of equal band width are wound onto the conductor (1).

11. A method according to any of claims 8 to 10,
wherein the fluid-impermeable insulation bands (2, 3; 2a, 2b, 3a, 3b) are wound with the same winding pitch.

12. A method according to any of claims 8 to 11,
wherein the sensor conductor (1) is left exposed in the insulation gaps (4).

13. A method according to any of claims 8 to 11,
wherein a filter layer (5) surrounding the sensor conductor (1) is arranged between said sensor conductor (1) and said fluid-impermeable conductor insulation, said filter layer (5) remaining exposed in said insulation gaps (4) and having a defined permeability for predetermined fluids only.

14. A detector assembly for detecting the presence of electroconductive fluids, comprising a sensor cable according to claim 7 and an evaluation means designed to detect changes in the electric behaviour of the sensor cable (13).

15. A detector assembly according to claim 14,
wherein the evaluation means is designed as a resistance bridge circuit (Rad, Rbc, R1, R2), comprising a first pair of diagonal circuit nodes (P1, P2) having one (c) of the two sensor lines (b, c) and one (a) of the two reference lines (a, d) connected thereto and being designed to have an input voltage (U_{E}) applied thereto,
and a second pair of diagonal circuit nodes (P3, P4) having the second one (b) of the two sensor lines (b, c) and well as the second one (d) of the two reference lines (a, d) connected thereto and being designed to have an output voltage (U_{B}) taken off therefrom.

## Revendications

1. Ligne de détection électrique (11) destinée à détecter la présence de fluides ayant une conductivité électrique,
comprenant un conducteur de détection électrique (1),
et une isolation de conducteur imperméable au fluide entourant directement le conducteur de détection (1), laquelle est formée par au moins deux bandes d'isolation (2, 3 ; 2a, 2b, 3a, 3b), lesquelles sont enroulées sur le conducteur de détection (1) dans une direction d'enroulement opposée respectivement de manière à présenter une forme hélicoïdale et selon un espacement d'enroulement axial (W2, W3), de telle sorte que se forment au niveau des emplacements de chevauchement répartis sur la circonférence de ligne, sur lesquels les espacements d'enroulement (W2, W3) des deux bandes d'isolation imperméables au fluide (2, 3 ; 2a, 2b, 3a, 3b) se chevauchent, des espaces sans isolation (4), au niveau desquels le conducteur de détection (1) est exempt d'isolation de ligne.

2. Ligne de détection selon la revendication 1, dans laquelle au moins deux espaces sans isolation (4) s'opposant de manière quasi diamétrale sont répartis sur la circonférence de ligne.

3. Ligne de détection selon la revendication 1 ou 2, dans laquelle les bandes d'isolation imperméables au fluide (2, 3; 2a, 2b, 3a, 3b) ont la même largeur de bande.

4. Ligne de détection selon l'une quelconque des revendications 1 à 3, dans laquelle les bandes d'isolation imperméables au fluide (2, 3; 2a, 2b, 3a, 3b) sont enroulées avec le même pas d'enroulement.

5. Ligne de détection selon l'une quelconque des revendications 1 à 4, dans laquelle le conducteur de détection (1) est libre dans les espaces sans isolation (4).

6. Ligne de détection selon l'une quelconque des revendications 1 à 4, dans laquelle est disposée entre le conducteur de détection (1) et l'isolation de conducteur imperméable au fluide une couche de filtre (5) entourant le conducteur de détection (1), laquelle est libre dans les espaces sans isolation (4) et ne présente une perméabilité définie que pour des fluides prédéterminés.

7. Câble de détection (13) comprenant deux lignes de détection (11) selon l'une quelconque des revendications 1 à 6 s'étendant l'une à côté de l'autre et deux lignes de référence (15) s'étendant à côté des lignes de détection (11), qui ne peuvent pas être influencées par les fluides devant être détectés.

8. Procédé de fabrication d'une ligne de détection électrique (11) destinée à détecter la présence de fluides ayant une conductivité électrique, comprenant les étapes consistant à :
fabriquer un conducteur électrique (1) ;
enrouler sur le conducteur de détection (1) au moins deux bandes d'isolation imperméables au fluide (2, 3 ; 2a, 2b, 3a, 3b) dans une direction d'enroulement opposée de manière à présenter une forme hélicoïdale et selon un espacement d'enroulement axial (W2, W3) de manière à se superposer, de telle sorte que se forment au niveau des emplacements de chevauchement répartis essentiellement régulièrement sur la circonférence de ligne, sur lesquels les espacements d'enroulement (W2, W3) des deux bandes d'isolation imperméables au fluide (2, 3 ; 2a, 2b, 3a, 3b) se chevauchent, des espaces sans isolation (4), sur lesquels le conducteur de détection (1) est exempt d'isolation de ligne.

9. Procédé selon la revendication 8, dans lequel au moins deux espaces sans isolation (4) s'opposant de manière quasi diamétrale sont répartis sur la circonférence de ligne.

10. Procédé selon la revendication 8 ou 9, dans lequel des bandes d'isolation imperméables au fluide (2, 3 ; 2a, 2b, 3a, 3b) sont enroulées sur le conducteur (1) avec la même largeur de bande.

11. Procédé selon l'une quelconque des revendications 8 à 10, dans lequel les bandes d'isolation imperméables au fluide (2, 3 ; 2a, 2b, 3a, 3b) sont enroulées avec le même pas d'enroulement.

12. Procédé selon l'une quelconque des revendications 8 à 11, dans lequel le conducteur de détection (1) est laissé libre dans les espaces sans isolation (4).

13. Procédé selon l'une quelconque des revendications 8 à 11, dans lequel est disposée entre le conducteur de détection (1) et l'isolation de conducteur imperméable au fluide une couche de filtre (5) entourant le conducteur de détection 1, laquelle est libre dans les espaces sans isolation (4) et ne présente une perméabilité définie que pour des fluides prédéterminés.

14. Dispositif de détection destiné à détecter la présence de fluides ayant une conductivité électrique,
comprenant un câble de détection (13) selon la revendication 7 et un dispositif d'évaluation, lequel est conçu pour la saisie des changements du comportement électrique du câble de détection (13).

15. Dispositif de détection selon la revendication 14, le dispositif d'évaluation étant conçu comme un circuit en pont à résistance (Rad, Rbc, R1, R2), comprenant une première paire de points de couplage diagonal (P1, P2), auxquels sont raccordées une (c) des deux lignes de détection (b, c) et une (a) des deux lignes de référence (a, d) et laquelle paire est conçue pour l'application d'une tension à l'entrée (U_{E}),
et une seconde paire de points de couplage diagonal (P3, P4), auxquels sont raccordées la seconde (b) des deux lignes de détection (b, c) et la seconde (d) des deux lignes de référence (a, d), et laquelle paire est conçue pour réduire une tension de sortie (U_{A}).
